# EUROPÄISCHE PATENTSCHRIFT

(11) **EP 3 808 950 B1**
(45) Veröffentlichungstag und Bekanntmachung des Hinweises auf die Patenterteilung: **25.05.2022**
(21) Anmeldenummer: 20196337.8
(22) Anmeldetag: 16.09.2020
(51) Int. Cl.: F01N 3/28

(54) **MISCHERANORDNUNG**
MIXER ARRANGEMENT
SYSTÈME MÉLANGEUR

(30) Priorität: 16.10.2019 DE 102019127882
(43) Veröffentlichungstag der Anmeldung: 21.04.2021
(73) Patentinhaber: Purem GmbH, 66539 Neunkirchen (DE)
(72) Erfinder: Röhr, Benjamin, 73732 Esslingen (DE); Tchamgoue, Herve, 72574 Bad Urach (DE); Berkemer, Frank, 72800 Eningen u.A. (DE); Hass, Ruben, 70599 Stuttgart (DE); Deuscher, Benjamin, 70188 Stuttgart (DE); Müller, Thomas, 66916 Breitenbach (DE)
(74) Vertreter: Ruttensperger Lachnit Trossin Gomoll

(56) Entgegenhaltungen:
- EP-A1- 3 216 992
- EP-A1- 3 549 663
- US-A1- 2015 113 967

## Beschreibung

Die vorliegende Erfindung betrifft eine Mischeranordnung für eine Abgasanlage einer Brennkraftmaschine, durch welche eine Vermischung eines in den Abgasstrom einer Brennkraftmaschine eingespritzten Reaktionsmittels, beispielsweise einer Harnstoff/Wasser-Lösung, mit dem Abgas herbeigeführt wird.

Eine derartige Mischeranordnung ist aus der DE 10 2018 107 766 A1 bekannt. Bei dieser bekannten Mischeranordnung umfasst der Mischereinsatz einen plattenartigen Träger, welcher zwischen zwei aneinander anschließende Abgasrohre eingreifend positioniert ist und zwischen den miteinander fest verbundenen Abgasrohren gehalten ist. Der plattenartige Träger weist nach radial innen hervorstehende und sich von diesem axial erstreckende, U-förmige Trageabschnitte auf, in welche ein ringartiger radial äußerer Bereich eines Mischerkörpers eingehängt ist und mit welchen der Mischerkörper durch Verschweißung verbunden ist.

Eine Mischeranordnung gemäß dem Oberbegriff des Anspruchs 1 ist aus der US 2015/0113967 A1 bekannt. Die von dem Mischerkörper radial außen abstehenden Verbindungsansätze sind in durch Ausformen einer Wandung eines einen rohrartigen Träger bereitstellenden stromabwärtigen Endbereichs eines Auslasskrümmers nach außen gebildeten Verbindungsaussparungen aufgenommen. Die in den Verbindungsaussparungen aufgenommenen Verbindungsansätze sind an der Innenoberfläche des stromabwärtigen Endbereichs des Auslasskrümmers durch Verschweißen festgelegt.

Es ist die Aufgabe der vorliegenden Erfindung, eine Mischeranordnung für eine Abgasanlage einer Brennkraftmaschine vorzusehen, welche bei einfacher baulicher Ausgestaltung eine gute Durchmischung von Abgas und in das Abgas eingespritztem Reaktionsmittel bewirken kann.

Erfindungsgemäß wird diese Aufgabe gelöst durch eine Mischeranordnung für eine Abgasanlage einer Brennkraftmaschine gemäß Anspruch 1. Die Mischanordnung umfasst einen eine Mischer-Längsachse ringartig umgebenden, rohrartigen Träger und einen an dem Träger getragenen Mischereinsatz, wobei der Mischereinsatz radial außen bezüglich der Mischer-Längsachse eine Mehrzahl von in Umfangsrichtung zueinander beabstandeten Verbindungsansätzen aufweist und der Träger eine Mehrzahl von Verbindungsaussparungen zur festen Verbindung des Mischereinsatzes mit dem Träger aufweist.

Der erfindungsgemäße Aufbau einer Mischeranordnung benötigt eine verringerte Anzahl an Komponenten, da der Mischereinsatz mit seinen Verbindungsansätzen ohne ein die Tragefunktion vermittelndes Bauteils direkt mit einem rohrartigen Träger verbunden wird, wobei dieser rohrartige Träger beispielsweise durch ein Abgasrohr bereitgestellt sein kann. Der Mischereinsatz selbst kann hinsichtlich seiner für die Durchmischungswechselwirkung mit dem Abgasstrom vorzusehenden Geometrie mit großem Ausgestaltungsfreiheitsgrad bereitgestellt und somit optimiert an den jeweils vorgesehenen Einsatzbereich angepasst werden.

Ein einfacher Aufbau kann dadurch unterstützt werden, dass wenigstens ein Teil der, vorzugsweise alle Verbindungsaussparungen in einer zur Mischer-Längsachse orthogonalen Ebene angeordnet sind.

Für eine hohe Verbindungsfestigkeit wird vorgeschlagen, dass wenigstens eine, vorzugsweise jede Verbindungsaussparung in Umfangsrichtung langgestreckt ist.

Ein stabiler Eingriff der Verbindungsansätze in die Verbindungsaussparungen wird dadurch erreicht, dass wenigstens eine, vorzugsweise jede Verbindungsaussparung eine Wandung des Trägers vollständig durchsetzt.

Weiter wird eine stabile Einbindung des Mischereinsatzes in den rohrartigen Träger dadurch gewährleistet, dass der Mischereinsatz im Bereich wenigstens eines, vorzugsweise aller Verbindungsansätze mit dem Träger durch Materialschluss, vorzugsweise Verschweißen, verbunden ist.

Um einen gegen den Austritt von Abgas dichten Abschluss zu erhalten, ist durch die materialschlüssige Verbindung jede die Wandung des Trägers vollständig durchsetzende und eine Verbindung mit einem Verbindungsansatz bereitstellende Verbindungsaussparung gasdicht abgeschlossen.

Für eine besonders einfach und kostengünstig herstellbaren, gleichwohl gegen Abgase und hohe Temperaturen resistenten Ausgestaltung ist der Mischereinsatz mit einem Mischerkörper und den vom Mischerkörper radial außen abstehenden Verbindungsansätzen als Blechumformteil ausgebildet.

Um den Mischereinsatz in einfacher Weise in den rohrartigen Träger einsetzen zu können, wird vorgeschlagen, dass wenigstens ein, vorzugsweise jeder Verbindungsansatz einen an dem Träger anliegenden und wenigstens eine Verbindungsaussparung in dem Träger überdeckenden ersten Ansatzabschnitt umfasst. Dies ermöglicht es insbesondere dann, wenn der Mischereinsatz als Blechumformteil ausgebildet ist, diesen im Bereich der Verbindungsansätze beim Einführen in den Träger zu verformen.

Wenn dabei weiter vorgesehen ist, dass wenigstens ein Verbindungsabschnitt einen dessen ersten Ansatzabschnitt mit dem Mischerkörper verbindenden und in radialem Abstand zu dem Träger sich erstreckenden zweiten Ansatzabschnitt umfasst, besteht die Möglichkeit, dass der Mischereinsatz bei thermischer Beaufschlagung sich unter Verformung der Verbindungsansätze insbesondere im Bereich jedes zweiten Ansatzabschnitts ausdehnt, ohne dabei durch am Träger anliegende und somit eine Bewegung behindernde Verbindungsansätze behindert zu sein.

Weiter kann vorgesehen sein, dass wenigstens ein Verbindungsabschnitt keinen zweiten Ansatzabschnitt aufweist, also ohne derartigen zweiten Ansatzabschnitt ausgebildet ist, so dass der erste Ansatzabschnitt eines derartigen Verbindungsansatzes sich im Wesentlichen direkt ausgehend vom Mischerkörper erstreckt. Auf diese Art und Weise wird bei der im Bereich anderer, mit einem zweiten Ansatzabschnitt ausgebildeter Verbindungsansätze zugelassenen thermischen Verformbarkeit eine definierte Positionierung des Mischerkörpers im Träger gewährleistet.

Um im Bereich der Verbindungsansätze eine elastische Verformbarkeit nach der Art von Federzungen zuzulassen, wird vorgeschlagen, dass wenigstens ein, vorzugsweise jeder zweite Ansatzabschnitt ausgehend vom Mischerkörper sich in Richtung der Mischer-Längsachse und nach radial außen vorzugsweise näherungsweise geradlinig erstreckt.

Der Mischereinsatz kann eine Mehrzahl von Abgasdurchtrittsöffnungen aufweisen oder/und kann mit seiner Außenumfangskontur eine Innenquerschnittsfläche des Trägers nicht vollständig abdeckend ausgebildet sein. Ferner kann der Mischereinsatz in Richtung der Mischer-Längsachse zueinander versetzt angeordnete und zur Mischer-Längsachse näherungsweise orthogonal oder angewinkelt orientierte Ablenkflächenbereiche aufweisen.

Die Erfindung betrifft ferner eine Abgasanlage für eine Brennkraftmaschine, umfassend eine erfindungsgemäß aufgebaute Mischeranordnung.

Dabei kann bei einem besonders einfach zu realisierenden Aufbau einer Abgasanlage der Träger durch ein zu einer Katalysatoranordnung führendes Abgasrohr bereitgestellt sein.

Die Erfindung betrifft ferner ein Verfahren zur Herstellung einer erfindungsgemäß aufgebauten Mischeranordnung, umfassend die folgenden Maßnahmen:
a) Bereitstellen des Trägers mit der Mehrzahl von Verbindungsaussparungen,
b) Bereitstellen des Mischereinsatzes mit der Mehrzahl von Verbindungsansätzen,
c) Einführen des Mischereinsatzes in den Träger derart, dass jeder Verbindungsansatz des Mischereinsatzes wenigstens eine Verbindungsaussparung des Trägers überdeckend positioniert wird.

Dabei kann die Maßnahme a) das Bereitstellen des Trägers als Blechrohr umfassen. Die Maßnahme b) umfasst das Bereitstellen des Mischereinsatzes mit einem Mischerkörper und den vom Mischerkörper radial außen abstehenden Verbindungsansätzen als Blechumformteil.

Für eine stabile Verbindung zwischen dem Träger und dem Mischereinsatz umfasst die Maßnahme a) das Bereitstellen des Trägers derart, dass wenigstens eine, vorzugsweise jede Verbindungsaussparung eine Wandung des Trägers vollständig durchsetzt.

Für eine stabile Verbindung zwischen dem Träger und dem Mischereinsatz wird ferner vorgeschlagen, dass die Maßnahme a) das Bereitstellen des Trägers derart umfasst, dass wenigstens ein Teil der, vorzugsweise alle Verbindungsaussparungen in einer zur Mischer-Längsachse orthogonalen Ebene angeordnet sind oder/und wenigstens eine, vorzugsweise jede Verbindungsaussparung in Umfangsrichtung langgestreckt ist.

Insbesondere dann, wenn der Mischereinsatz als grundsätzlich elastisch verformbares Blechumformteil bereitgestellt wird, kann vorgesehen sein, dass bei der Maßnahme c) wenigstens jeder einen ersten Ansatzabschnitt und einen zweiten Ansatzabschnitt umfassende Verbindungsansatz ausgehend von einer Montage-Anfangsposition elastisch verformt wird.

Das Verfahren umfasst ferner eine Maßnahme d) zum materialschlüssigen Verbinden des Mischereinsatzes im Bereich wenigstens eines, vorzugsweise jedes eine der Verbindungsaussparungen überdeckend positionierten Verbindungsansatzes mit dem Träger. Somit wird gewährleistet, dass auch bei Auftreten stärkerer Vibrationen der Mischereinsatz sich nicht vom Träger löst.

Um das Austreten von Abgas zu unterbinden, wird bei der Maßnahme d) jede von einem Verbindungsansatz überdeckte und die Wandung des Trägers vollständig durchsetzende Verbindungsaussparung durch die materialschlüssige Verbindung gasdicht abgeschlossen.

Die vorliegende Erfindung wird nachfolgend mit Bezug auf die beiliegenden Figuren beschrieben. Es zeigt:
- Fig. 1: eine Draufsicht auf eine Abgasanlage für eine Brennkraftmaschine eines Kraftfahrzeugs;
- Fig. 2: den Bereich II in Fig. 1 vergrößert;
- Fig. 3: eine Längsschnittansicht des in Fig. 2 dargestellten Endbereichs der Abgasanlage der Fig. 1;
- Fig. 4: eine Ansicht des Fig. 2 dargestellten Bereichs in Blickrichtung IV in Fig. 3.

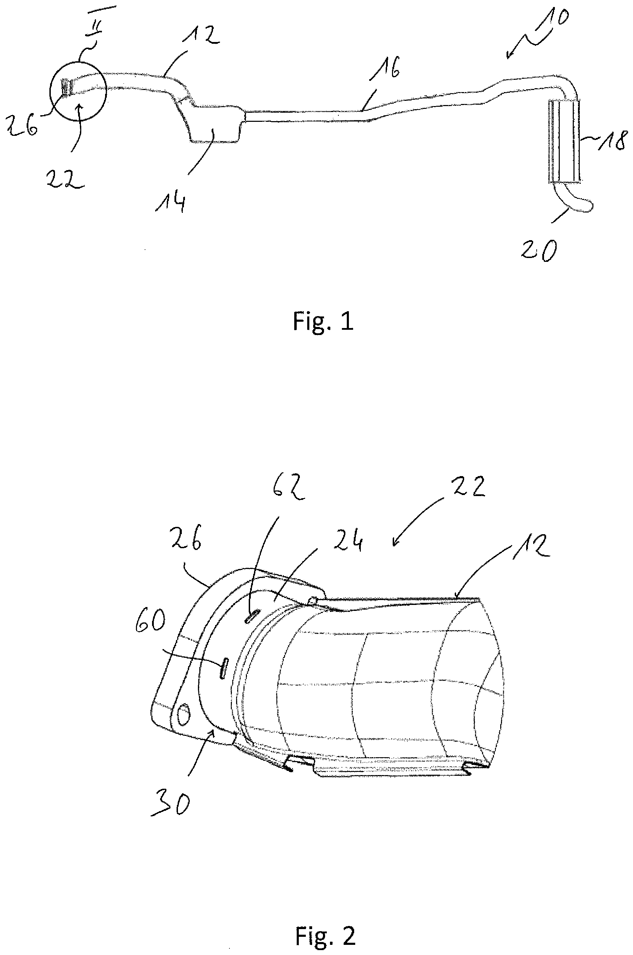

In Fig. 1 ist eine Abgasanlage für eine Brennkraftmaschine eines Kraftfahrzeugs allgemein mit 10 bezeichnet. Die Abgasanlage 10 umfasst, anschließend an ein ein-oder mehrstückig ausgebildetes und beispielsweise für eine verbesserte thermische Isolierung ummanteltes Abgasrohr 12, eine Katalysatoranordnung 14, insbesondere SCR-Katalysatoranordnung, welche über ein weiteres Abgasrohr 16 mit einem Schalldämpfer 18 verbunden ist. Vom Schalldämpfer 18 erstreckt sich ein Endrohr 20, über welches das von einer Brennkraftmaschine ausgestoßene Abgas zur Umgebung abgegeben wird.

Die Fig. 2 zeigt vergrößert den Endbereich 22 der Abgasanlage 10 bzw. des Abgasrohrs 12. An ein im Wesentlichen zylindrisch geformtes Ende 24 des Abgasrohrs 12 ist beispielsweise durch Verschweißung ein Verbindungsflansch 26 angebunden, über welchen das Abgasrohr 12 an ein weiteres, beispielsweise einen Injektor für ein Reaktionsmittel, wie z. B. eine Harnstoff/Wasser-Lösung, tragendes, in den Figuren nicht dargestelltes Abgasrohr angebunden werden kann. Im Bereich des Endes 24 des Abgasrohrs 12 ist ein allgemein mit 28 bezeichneter und vorzugsweise einstückig und als Blechumformteil bereitgestellter, plattenartiger Mischereinsatz an das allgemein einen Träger 30 für den Mischereinsatz 28 bereitstellende und zusammen mit dem Mischereinsatz 28 eine Mischeranordnung 27 bereitstellende Abgasrohr 12 angebunden.

Der Mischereinsatz 28 weist einen Mischerkörper 32 auf, welcher allgemein eine sattelartige Struktur bereitstellt und in einem zentralen und zu einer Mischer-Längsachse A sich näherungsweise quer erstreckenden Scheitelbereich 34 und beidseits des Scheitelbereichs 34 angeordneten und bezüglich diesem axial in Richtung stromabwärts versetzt angeordneten Ablenkbereichen 36, 38 jeweils zur Mischer-Längsachse A näherungsweise quer bzw. orthogonal oder angewinkelt orientierte Ablenkflächenbereiche 40, 42, 44 aufweist. In dem Mischerkörper 32 ist eine Mehrzahl von Durchtrittsöffnungen 46 ausgebildet, durch welche das den Mischerkörper 32 anströmende Abgas hinströmen kann. Der Mischerkörper 32 ist so dimensioniert, dass er die Innenquerschnittsfläche des Abgasrohrs 12 im Bereich seines Endes 24 nicht vollständig abdeckt, so dass insbesondere beidseits der Ablenkbereiche 36, 38 sichelartige Durchtrittsaussparungen 48, 50 gebildet sind, durch welche hindurch den Mischerkörper 32 umströmendes Abgas strömen kann.

Ausgehend vom Mischerkörper 32 erstrecken sich im dargestellten Ausgestaltungsbeispiel drei Verbindungsansätze 52, 54, 56. Dabei ist die Anordnung derart, dass die beiden näher beieinanderliegenden Verbindungsansätze 54, 56 bezüglich der Mischer-Längsachse A dem einzeln angeordneten Verbindungsansatz 52 näherungsweise gegenüberliegend angeordnet sind. Mit den Verbindungsansätzen 52, 54, 56 ist der Mischereinsatz 28 in der nachfolgend beschriebenen Art und Weise an den Träger 30, also das Abgasrohr 12 im Bereich seines im Wesentlichen zylindrisch geformten Endes 24, angebunden.

Jeder Verbindungsansatz 52, 54, 56 weist einen näherungsweise in Richtung der Mischer-Längsachse A sich erstreckenden ersten Ansatzabschnitt 58 auf. Die ersten Ansatzabschnitte 58 der Verbindungsansätze 52, 54, 56 liegen vorzugsweise im Wesentlichen im gesamten Bereich ihrer Axialerstreckung an der Innenumfangsfläche des Trägers 30 an. Da dieser Träger 30 eine kreisartige Innenquerschnittsgeometrie aufweist, können die Verbindungsansätze 52, 54, 56 im Bereich ihrer ersten Ansatzabschnitte 58 an diese runde Querschnittsgeometrie angepasst gerundet ausgebildet sein.

In Zuordnung zu jedem Verbindungsansatz 52, 54, 56 ist im Abgasrohr 12 bzw. am Ende 24 desselben eine Verbindungsaussparung vorgesehen, wobei in Fig. 2 die den beiden näher beieinanderliegenden Verbindungsansätzen 54, 56 zugeordneten Verbindungsaussparungen 60, 62 zu sehen sind. Vorzugsweise alle den Verbindungsansätzen 52, 54, 56 zugeordnete Verbindungsaussparungen 60, 62 sind in Umfangsrichtung langgestreckt und sind näherungsweise in einer zur Mischer-Längsachse A orthogonalen Ebene angeordnet, was bedeutet, dass beispielsweise die in Umfangsrichtung sich erstreckenden Längsmittenachsen aller Verbindungsaussparungen 60, 62 in einer gemeinsamen, zur Mischer-Längsachse A orthogonalen Ebene liegen können.

Die Verbindungsansätze 52, 54, 56 sind im Ende 24 des Abgasrohrs 12 so positioniert, dass sie jeweils eine der Verbindungsaussparungen 60, 62 vorzugsweise vollständig überdecken. Zur festen Anbindung des Mischereinsatzes 28 an den Träger 30 bzw. das Abgasrohr 12 wird im Bereich der den Träger 30, also eine Wandung des Abgasrohrs 12, vollständig durchsetzenden und somit nach außen auch offenen Verbindungsaussparungen 60, 62 jeweils eine Verschweißung 63 gebildet, so dass das Schweißmaterial eine materialschlüssige Anbindung der die jeweiligen Verbindungsaussparungen 60, 62 von der Innenseite her überdeckenden Verbindungsansätze 52, 54, 56 an den Träger 30 bereitstellt und gleichzeitig auch die Verbindungsaussparungen 60, 62 gasdicht abschließt.

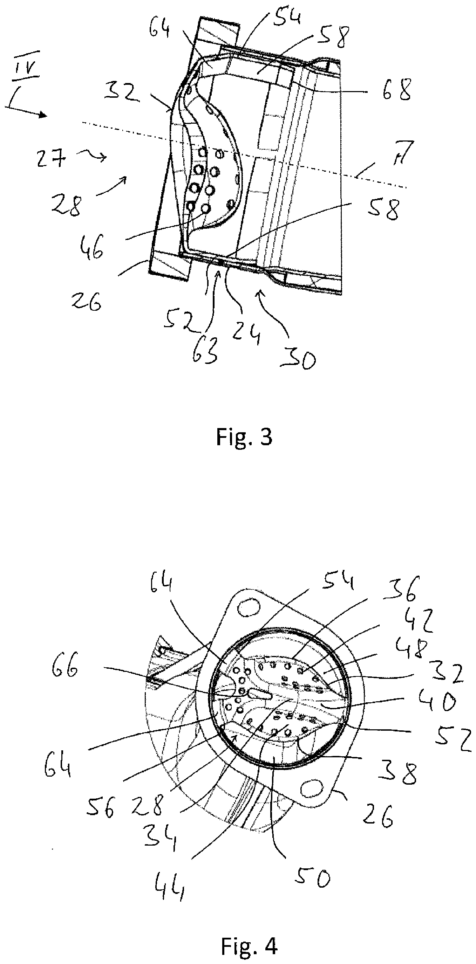

In Fig. 3 ist zu erkennen, dass, während der Verbindungsansatz 52 mit seinem ersten Ansatzabschnitt 58 sich im Wesentlichen direkt anschließend an den Mischerkörper 32 radial außen von diesem ausgehend näherungsweise in Richtung der Mischer-Längsachse A erstreckt, bei den beiden näher beieinanderliegenden Verbindungsansätzen 54, 56 jeweils ein zweiter Ansatzabschnitt 64 vorgesehen ist. Der zweite Ansatzabschnitt 64 stellt eine Verbindung zwischen dem jeweiligen ersten Ansatzabschnitt 58 und dem Mischerkörper 32 bereit. Der vorzugsweise geradlinig, also im Wesentlichen ungekrümmt sich erstreckende zweite Ansatzabschnitt erstreckt sich ausgehend vom Mischerkörper 32 axial in Richtung der Mischer-Längsachse A nach stromabwärts und nach radial außen, so dass jeder zweite Ansatzabschnitt 64 sich ausgehend vom Mischerkörper 32 nach radial außen schräg auf das Ende 24 des Abgasrohrs 12, also den Träger 30, zu erstreckt, zu dem Träger 30 bzw. dessen Innenumfangsfläche jedoch einen radialen Abstand aufweist. Beispielsweise kann zwischen einem derartigen zweiten Ansatzabschnitt 64 und der Mischer-Längsachse ein Winkel im Bereich zwischen 5° und 30° gebildet sein. Ein entsprechender Winkel ist dann auch zwischen einem jeweiligen zweiten Ansatzabschnitt 64 und dem zylindrisch geformten Ende 24 des Abgasrohrs 12 gebildet, so dass jeder zweite Ansatzabschnitt 64 sich bezüglich des rohrartigen Endes 24 nicht exakt parallel, sondern dazu leicht angestellt nach radial außen erstreckt.

Durch das Bereitstellen zumindest eines Teils der Verbindungsansätze 52, 54, 56 mit einem derartigen zweiten Ansatzabschnitt 64 wird die Möglichkeit geschaffen, dass bei Erwärmung durch den Abgasstrom der Mischerkörper 32 sich bezüglich der Mischer-Längsachse A radial ausdehnen kann, wobei dann eine Verformung der einen jeweiligen zweiten Ansatzabschnitt 64 aufweisenden Verbindungsansätze 54, 56 diese Ausdehnungsbewegung des Mischerkörpers 32 kompensieren kann. Da der einzeln angeordnete Verbindungsansatz 52 keinen derartigen zweiten Ansatzabschnitt aufweist, stellt dieser eine definierte Positionierung des Mischerkörpers im Innenquerschnitt des Trägers 30 bereit, so dass auch sichergestellt ist, dass der auf den Mischereinsatz 28 zu gerichtete Sprühkegel des in den Abgasstrom eingespritzten Reaktionsmittels auf einen definierten Bereich des Mischerkörpers 32 auftreffen kann. Insbesondere kann dieser Sprühkegel auf eine schlitzartige Öffnung 66 im Scheitelbereich 34 des Mischerkörpers 32 zentriert ausgerichtet sein.

Beim Zusammenbau einer Abgasanlage wird zunächst der Mischereinsatz 28 mit seinem Mischerkörper 32 und den von diesem radial außen ausgehenden Verbindungsansätzen 52, 54, 56 als Blechumformteil bereitgestellt. Dabei können die Verbindungsansätze 52, 54, 56 beispielsweise so geformt sein bzw. sich so bezüglich des Mischerkörpers 32 erstrecken, dass auch die ersten Ansatzabschnitte 58 sich geringfügig nach radial außen erstrecken. Der Mischereinsatz 28 wird dann in das Abgasrohr 12 bzw. dessen zylindrisches Ende 24 axial eingeführt, wobei an den freien Enden der Verbindungsansätze 52, 54, 56 vorgesehene und nach radial innen geneigte Abbiegungen 68 jeweils Einführschrägen bereitstellen, welche dafür sorgen, dass die Verbindungsansätze 52, 54, 56, welche beim Einführen beispielsweise leicht nach radial innen verformt gehalten werden können, in das Ende 24 eintreten können bzw. durch die Abweisschrägen beim Einführen in den Träger 30 nach radial innen verformt werden.

Der Mischereinsatz 28 wird dabei so positioniert, dass jeder Verbindungsansatz 52, 54, 56 eine diesem zugeordnete Verbindungsaussparung 60, 62 überdeckt.

Nachfolgend wird im Bereich jeder Verbindungsaussparung 60, 62 eine Verschweißung erzeugt, so dass einerseits eine feste Anbindung des Mischereinsatzes im Bereich seiner Verbindungsansätze 52, 54, 56 entsteht, andererseits jede der Verbindungsaussparungen 60, 62 gasdicht abgeschlossen wird.

Die erfindungsgemäß aufgebaute Mischeranordnung zeichnet sich durch eine besonders einfache und einfach herzustellende Ausgestaltung aus, bei welcher keine eine tragende Verbindung zwischen dem Mischereinsatz und dem durch ein Abgasrohr bereitgestellten Träger für den Mischereinsatz realisierenden zusätzlichen Bauteile vorgesehen sind. Der Mischereinsatz kann als Blechumformteil bereitgestellt werden, so dass dieser einerseits leicht und kostengünstig herstellbar ist, andererseits auch eine gegen Abgase und Reaktionsmittel und insbesondere auch hohe Temperaturen resistente Ausgestaltung aufweist.

Der Mischerkörper des Mischereinsatzes kann mit hoher Ausgestaltungsfreiheit hinsichtlich seiner Formgebung an die für eine jeweilige Abgasanlage bestehenden Anforderungen angepasst ausgebildet werden, um einerseits eine ausreichende Oberfläche bereitzustellen, auf welche ein als Sprühnebel eingebrachtes Reaktionsmittel auftreffen kann, um von dieser Oberfläche einerseits abgelenkt und dabei durch Verwirbelung mit dem Abgasstrom
vermischt zu werden, andererseits durch thermische Wechselwirkung verdampft zu werden. Eine derartige Mischeranordnung kann in einfacher Art und Weise in beliebigen Bereichen einer Abgasanlage vorgesehen werden, um insbesondere stromaufwärts bezüglich einer SCR-Katalysatoranordnung die erforderliche Durchmischung von Abgas und Reaktionsmittel erzeugen zu können.

Beispielsweise abhängig von der Größe des Mischereinsatzes können auch mehr oder weniger als drei Verbindungsansätze mit anderer Verteilung in Umfangsrichtung vorgesehen sein. Auch ist es möglich, bei wenigstens einem der Verbindungsansätze am axialen freien Ende des ersten Ansatzabschnitts einen nach radial außen greifenden Eingriffsabschnitt vorzusehen, der in eine zugeordnete Verbindungsaussparung eingreifend positioniert werden kann und durch die zu bildende Verschweißung mit dem Träger fest verbunden werden kann. Auf diese Art und Weise kann sowohl eine definierte axiale Positionierung, als auch eine definierte Drehpositionierung des Mischereinsatzes bezüglich des Trägers vor Herstellung der materialschlüssigen Verbindung gewährleistet werden.

## Patentansprüche

1. Mischeranordnung für eine Abgasanlage einer Brennkraftmaschine, umfassend einen eine Mischer-Längsachse (A) ringartig umgebenden, rohrartigen Träger (30) und einen an dem Träger (30) getragenen Mischereinsatz (28), wobei der Mischereinsatz (28) radial außen bezüglich der Mischer-Längsachse (A) eine Mehrzahl von in Umfangsrichtung zueinander beabstandeten Verbindungsansätzen (52, 54, 56) aufweist, wobei der Mischereinsatz (28) mit einem Mischerkörper (32) und den vom Mischerkörper (32) radial außen abstehenden Verbindungsansätzen (52, 54, 56) als Blechumformteil ausgebildet ist, wobei der Träger (30) eine Mehrzahl von Verbindungsaussparungen (60, 62) zur festen Verbindung des Mischereinsatzes (28) mit dem Träger (30) aufweist, **dadurch gekennzeichnet, dass** wenigstens eine Verbindungsaussparung (60, 62) eine Wandung des Trägers (30) vollständig durchsetzt, und dass der Mischereinsatz (28) im Bereich wenigstens eines Verbindungsansatzes (54, 56, 58) mit dem Träger (30) durch Materialschluss derart verbunden ist, dass durch die materialschlüssige Verbindung jede die Wandung des Trägers (30) vollständig durchsetzende und eine Verbindung mit einem Verbindungsansatz (28) bereitstellende Verbindungsaussparung (60, 62) gasdicht abgeschlossen ist.

2. Mischeranordnung nach Anspruch 1, **dadurch gekennzeichnet, dass** wenigstens ein Teil der, vorzugsweise alle Verbindungsaussparungen (60, 62) in einer zur Mischer-Längsachse (A) orthogonalen Ebene angeordnet sind, oder/und dass wenigstens eine, vorzugsweise jede Verbindungsaussparung (60, 62) in Umfangsrichtung langgestreckt ist.

3. Mischeranordnung nach Anspruch 1 oder 2, **dadurch gekennzeichnet, dass** jede Verbindungsaussparung (60, 62) eine Wandung des Trägers (30) vollständig durchsetzt.

4. Mischeranordnung nach einem der vorangehenden Ansprüche, **dadurch gekennzeichnet, dass** der Mischereinsatz (28) im Bereich wenigstens aller Verbindungsansätze (54, 56, 58) mit dem Träger (30) durch Materialschluss verbunden ist.

5. Mischeranordnung nach einem der vorangehenden Ansprüche, **dadurch gekennzeichnet, dass** der Mischereinsatz (28) im Bereich wenigstens eines, vorzugsweise aller Verbindungsansätze (54, 56, 58) mit dem Träger (30) durch Verschweißen verbunden ist.

6. Mischeranordnung nach einem der vorangehenden Ansprüche, **dadurch gekennzeichnet, dass** wenigstens ein, vorzugsweise jeder Verbindungsansatz (52, 54, 56) einen an dem Träger (30) anliegenden und wenigstens eine Verbindungsaussparung (60, 62) in dem Träger (30) überdeckenden ersten Ansatzabschnitt (58) umfasst.

7. Mischeranordnung nach Anspruch 6, **dadurch gekennzeichnet, dass** wenigstens ein Verbindungsabschnitt (54, 56) einen dessen ersten Ansatzabschnitt (58) mit dem Mischerkörper (32) verbindenden und in radialem Abstand zu dem Träger (30) sich erstreckenden zweiten Ansatzabschnitt (64) umfasst.

8. Mischeranordnung nach Anspruch 7, **dadurch gekennzeichnet, dass** wenigstens ein, vorzugsweise jeder zweite Ansatzabschnitt (64) ausgehend vom Mischerkörper (32) sich in Richtung der Mischer-Längsachse (A) und nach radial außen vorzugsweise näherungsweise geradlinig erstreckt, oder/und dass wenigstens ein Verbindungsabschnitt (52) keinen zweiten Ansatzabschnitt aufweist.

9. Mischeranordnung nach einem der vorangehenden Ansprüche, **dadurch gekennzeichnet, dass** der Mischereinsatz (28) eine Mehrzahl von Abgasdurchtrittsöffnungen (46) aufweist, oder/und dass der Mischereinsatz (28) mit seiner Außenumfangskontur eine Innenquerschnittsfläche des Trägers (36) nicht vollständig abdeckt, oder/und dass der Mischereinsatz (28) in Richtung der Mischer-Längsachse (A) zueinander versetzt angeordnete und zur Mischer-Längsachse (A) näherungsweise orthogonal oder angewinkelt orientierte Ablenkflächenbereiche (40, 42, 44) aufweist.

10. Abgasanlage für eine Brennkraftmaschine, umfassend eine Mischeranordnung (27) nach einem der vorangehenden Ansprüche, vorzugsweise wobei der Träger (30) durch ein zu einer Katalysatoranordnung (14) führendes Abgasrohr (12) bereitgestellt ist.

11. Verfahren zur Herstellung einer Mischeranordnung (27) nach einem der vorangehenden Ansprüche, umfassend die folgenden Maßnahmen:
a) Bereitstellen des Trägers (30) mit der Mehrzahl von Verbindungsaussparungen (60, 62) derart, dass wenigstens eine Verbindungsaussparung (60, 62) eine Wandung des Trägers (30) vollständig durchsetzt,
b) Bereitstellen des Mischereinsatzes (28) mit einem Mischerkörper (32) und der Mehrzahl von vom Mischerkörper (32) radial außen abstehenden Verbindungsansätzen (52, 54, 56) als Blechumformteil,
c) Einführen des Mischereinsatzes (28) in den Träger (30) derart, dass jeder Verbindungsansatz (52, 54, 56) des Mischereinsatzes wenigstens eine Verbindungsaussparung (60, 62) des Trägers (30) überdeckend positioniert wird,
d) materialschlüssiges Verbinden des Mischereinsatzes (28) im Bereich wenigstens eines eine der Verbindungsaussparungen (60, 62) überdeckend positionierten Verbindungsansatzes (52, 54, 56) mit dem Träger (30), wobei jede von einem Verbindungsansatz (52, 54, 56) überdeckte und die Wandung des Trägers (30) vollständig durchsetzende Verbindungsaussparung (60, 62) durch die materialschlüssige Verbindung gasdicht abgeschlossen wird.

12. Verfahren nach Anspruch 11, **dadurch gekennzeichnet, dass** die Maßnahme a) das Bereitstellen des Trägers (30) als Blechrohr umfasst.

13. Verfahren nach Anspruch 11 oder 12, **dadurch gekennzeichnet, dass** die Maßnahme a) das Bereitstellen des Trägers (30) derart umfasst, dass wenigstens ein Teil der, vorzugsweise alle Verbindungsaussparungen (60, 62) in einer zur Mischer-Längsachse (A) orthogonalen Ebene angeordnet sind oder/und wenigstens eine, vorzugsweise jede Verbindungsaussparung (60, 62) in Umfangsrichtung langgestreckt ist oder/und jede Verbindungsaussparung (60, 62) eine Wandung des Trägers (30) vollständig durchsetzt.

14. Verfahren nach einem der Ansprüche 11-13, **dadurch gekennzeichnet dass** bei der Maßnahme c) wenigstens jeder einen ersten Ansatzabschnitt (58) und einen zweiten Ansatzabschnitt (64) umfassende Verbindungsansatz (54, 56) ausgehend von einer Montage-Anfangsposition elastisch verformt wird, oder/und dass die Maßnahme d) zum materialschlüssigen Verbinden des Mischereinsatzes (28) im Bereich jedes eine der Verbindungsaussparungen (60, 62) überdeckend positionierten Verbindungsansatzes (52, 54, 56) mit dem Träger (30) vorgesehen ist.

## Claims

1. Mixer device for an exhaust system of an internal combustion engine, comprising a tubular carrier (30) enclosing a mixer longitudinal axis (A) in a ring-shaped manner and a mixer insert (28) carried at the carrier (30), wherein the mixer insert (28) has a plurality of connection attachments (52, 54, 56) located at spaced locations from one another in the circumferential direction radially on the outside in relation to the mixer longitudinal axis (A), wherein the mixer insert (28) is configured with a mixer body (32) and with the connection attachments (52, 54, 56) projecting radially on the outside from the mixer body (32) as shaped sheet metal parts, wherein the carrier (30) has a plurality of connection recesses (60, 62) for permanently connecting the mixer insert (28) to the carrier (30), **characterized in that** at least one connection recess (60, 62) passes completely through a wall of the carrier (30) and **in that** the mixer insert (28) is connected to the carrier (30) by connection in substance, in the area of at least one connection attachment (54, 56, 58) in such a way that due to the connection in substance each connection recess (60, 62) which passes completely through the wall of the carrier (30) and provides a connection to a connection attachment (28) is sealed in a gastight manner.

2. Mixer device in accordance with claim 1, **characterized in that** at least some and preferably all connection recesses (60, 62) are arranged in a plane arranged at right angles to a mixer longitudinal axis (A), or/and that at least one and preferably each connection recess (60, 62) is elongated in the circumferential direction.

3. Mixer device in accordance with claim 1 or 2, **characterized in that** each connection recess (60, 62) passes completely through a wall of the carrier (30).

4. Mixer device in accordance with one of the preceding claims, **characterized in that** the mixer insert (28) is connected to the carrier (30) by connection in substance, in the area of at least all connection attachments (54, 56, 58).

5. Mixer device in accordance with one of the preceding claims, **characterized in that** the mixer insert (28) is connected to the carrier (30) by welding in the area of at least one, preferably all connection attachments (54, 56, 58).

6. Mixer device in accordance with one of the preceding claims, **characterized in that** at least one and preferably each connection attachment (52, 54, 56) comprises a first attachment section (58), which is in contact with the carrier (30) and covers at least one connection recess (60, 62) in the carrier (30).

7. Mixer device in accordance with claim 6, **characterized in that** at least one connection section (54, 56) comprises a second attachment section (64), which connects its first attachment section (58) to the mixer body (32) and extends at a radially spaced location from the carrier (30).

8. Mixer device in accordance with claim 7, **characterized in that** at least one and preferably every other attachment section (64) extends starting from the mixer body (32) in the direction of the mixer longitudinal axis (A) and radially outwards, preferably approximately linearly or/and that at least one connection section (52) has no second attachment section.

9. Mixer device in accordance with one of the preceding claims, **characterized in that** the mixer insert (28) has a plurality of exhaust gas passage openings (46), or/and that the mixer insert (28) does not completely cover with its outer circumferential contour an inner cross-sectional area of the carrier (30) or/and that the mixer insert (28) has deflection surface areas (40, 42, 44) arranged offset in relation to one another in the direction of the mixer longitudinal axis (A) and oriented approximately at right angles or at an angle in relation to the mixer longitudinal axis (A).

10. Exhaust system for an internal combustion engine, comprising a mixer device (27) in accordance with one of the preceding claims, preferably wherein the carrier (30) is provided by an exhaust gas pipe (12) leading to a catalytic converter device (14).

11. Process for manufacturing a mixer device (27) in accordance with one of the preceding claims, comprising the following steps:
a) Provision of the carrier (30) with the plurality of connection recesses (60, 62) in such a way that at least one connection recess (60, 62) completely passes through a wall of the carrier (30),
b) provision of the mixer insert (28) with a mixer body (32) and the plurality of connection attachments (52, 54, 56) extending radially on the outside from the mixer body (32) as a shaped sheet metal part,
c) insertion of the mixer insert (28) into the carrier (30) such that each connection attachment (52, 54, 56) of the mixer insert is positioned such that it covers at least one connection recess (60, 62) of the carrier (30), and
d) connection in substance of the mixer insert (28) to the carrier (30) in the area of at least one connection attachment (52, 54, 56) positioned to cover at least one of the connection recesses (60, 62), wherein each connection recess (60, 62) covered by a connection attachment (52, 54, 56) and passing completely through the wall of the carrier (30) is sealed in a gas tight manner by the connection in substance.

12. Process in accordance with claim 11, **characterized in that** step a) comprises the provision of the carrier (30) as a sheet metal pipe.

13. Process in accordance with claim 11 or 12, **characterized in that** step a) comprises the provision of the carrier (30) such that at least some connection recesses (60, 62) and preferably all connection recesses (60, 62) are arranged in a plane extending at right angles to the mixer longitudinal axis (A) or/and that at least one and preferably each connection recess (60, 62) is elongated in the circumferential direction or/and each connection recess (60, 62) passes completely through a wall of the carrier (30).

14. Process in accordance with one of the claims 11-13, **characterized in that** in step c) at least each connection attachment (54, 56) comprising a first attachment section (58) and a second attachment section (64) is deformed elastically starting from a mounting initial position, or/and that step d) is provided for connecting the mixer insert (28) in substance to the carrier (30) in the area of each connection attachment (52, 54, 56) positioned such that it covers one of the connection recesses (60, 62).

## Revendications

1. Dispositif de mélangeur pour un système de gaz d'échappement d'un moteur à combustion interne, comprenant un support tubulaire (30) entourant en forme d'anneau un axe longitudinal du mélangeur (A) et un insert de mélangeur (28) porté par le support (30), l'insert de mélangeur (28) présentant une pluralité de pièces de connexion (52, 54, 56) disposés à distance les unes des autres dans la direction circonférentielle, radialement à l'extérieur par rapport à l'axe longitudinal du mélangeur (A), l'insert de mélangeur (28) étant réalisé avec un corps de mélangeur (32) et avec les pièces de connexion (52, 54, 56) faisant saillie radialement à l'extérieur du corps de mélangeur (32) sous forme de pièces de tôle façonnées, le support (30) présentant une pluralité d'évidements de connexion (60, 62) pour la connexion permanente de l'insert de mélangeur (28) au support (30), **caractérisé en ce qu'**au moins un évidement de connexion (60, 62) traverse complètement une paroi du support (30) et **en ce que** l'insert de mélangeur (28) est connecté au support (30) par connexion en substance, dans la zone d'au moins une pièce de connexion (54, 56, 58), de telle sorte que chaque évidement de connexion (60, 62) traversant complètement la paroi du support (30) et permettant le connexion à une pièce de connexion (28) est fermé de manière étanche au gaz par la connexion en substance.

2. Dispositif de mélangeur selon la revendication 1, **caractérisé en ce qu'**au moins une partie et de préférence tous les évidements de connexion (60, 62) sont disposés dans un plan disposé à angle droit par rapport à l'axe longitudinal (A) du mélangeur, ou/et **en ce qu'**au moins un et de préférence chaque évidement de connexion (60, 62) est allongé dans la direction circonférentielle.

3. Dispositif de mélangeur selon la revendication 1 ou 2, **caractérisé en ce que** chaque évidement de connexion (60, 62) traverse complètement une paroi du support (30).

4. Dispositif de mélangeur selon l'une des revendications précédentes, **caractérisé en ce que** l'insert de mélange (28) est relié au support (30) par connexion en substance, dans la zone d'au moins toutes les pièces de connexion (54, 56, 58).

5. Dispositif de mélangeur selon l'une des revendications précédentes, **caractérisé en ce que** l'insert de mélange (28) est relié au support (30) par soudage dans la zone d'au moins une, de préférence de toutes les pièces de connexion (54, 56, 58).

6. Dispositif de mélangeur selon l'une des revendications précédentes, **caractérisé en ce qu'**au moins une et de préférence chaque pièce de connexion (52, 54, 56) comprend une première section de pièce de connexion (58), qui est en contact avec le support (30) et recouvre au moins un évidement de connexion (60, 62) dans le support (30).

7. Dispositif de mélangeur selon la revendication 6, **caractérisé en ce qu'**au moins une section de connexion (54, 56) comprend une deuxième section de pièce de connexion (64), qui relie sa première section de pièce de connexion (58) au corps de mélangeur (32) et s'étend à un emplacement radialement espacé du support (30).

8. Dispositif de mélangeur selon la revendication 7, **caractérisé en ce qu'**au moins une et de préférence une section de pièce de connexion sur deux (64) s'étend à partir du corps de mélangeur (32) dans la direction de l'axe longitudinal du mélangeur (A) et radialement vers l'extérieur, de préférence approximativement linéairement ou/et **en ce qu'**au moins une section de pièce de connexion (52) ne présente pas de deuxième section de pièce de connexion.

9. Dispositif de mélangeur selon l'une des revendications précédentes, **caractérisé en ce que** l'insert de mélange (28) présente plusieurs ouvertures de passage de gaz d'échappement (46) ou/et **en ce que** l'insert de mélange (28) ne recouvre pas complètement, avec son contour périphérique extérieur, une surface de section transversale intérieure du support (30) ou/et **en ce que** l'insert de mélange (28) présente des surfaces de déviation (40, 42, 44) disposées de manière décalée les unes par rapport aux autres dans la direction de l'axe longitudinal du mélangeur (A) et orientées approximativement à angle droit ou en biais par rapport à l'axe longitudinal du mélangeur (A).

10. Système d'échappement pour un moteur à combustion interne, comprenant un dispositif de mélangeur (27) selon l'une des revendications précédentes, de préférence dans lequel le support (30) est fourni par un tuyau de gaz d'échappement (12) menant à un dispositif de convertisseur catalytique (14).

11. Procédé de fabrication d'un dispositif mélangeur (27) selon l'une des revendications précédentes, comprenant les étapes suivantes :
a) mise à disposition du support (30) avec la pluralité d'évidements de connexion (60, 62) de telle sorte qu'au moins un évidement de connexion (60, 62) traverse complètement une paroi du support (30),
b) fourniture de l'insert de mélangeur (28) avec un corps de mélangeur (32) et la pluralité de pièces de connexion (52, 54, 56) s'étendant radialement à l'extérieur du corps de mélangeur (32) comme une pièce de tôle façonnée,
c) insertion de l'insert de mélangeur (28) dans le support (30) de telle sorte que chaque pièce de connexion (52, 54, 56) de l'insert de mélangeur est positionné de telle sorte qu'il couvre au moins un évidement de connexion (60, 62) du support (30), et
d) connexion en substance de l'insert de mélangeur (28) avec le support (30) dans la zone d'au moins une pièce de connexion (52, 54, 56) positionnée pour couvrir au moins un des évidements de connexion (60, 62), dans laquelle chaque évidement de connexion (60, 62) couvert par une pièce de connexion (52, 54, 56) et traversant complètement la paroi du support (30) est fermé de manière étanche aux gaz par la connexion en substance.

12. Procédé selon la revendication 11, **caractérisé en ce que** l'étape a) comprend la fourniture du support (30) sous la forme d'un tuyau en tôle.

13. Procédé selon la revendication 11 ou 12, **caractérisé en ce que** l'étape a) comprend la disposition du support (30) de telle sorte qu'au moins une partie des évidements de connexion (60, 62) et de préférence tous les évidements de connexion (60, 62) sont disposés dans un plan s'étendant perpendiculairement à l'axe longitudinal du mélangeur (A) ou/et qu'au moins un et de préférence chaque évidement de connexion (60, 62) est allongé dans la direction circonférentielle ou/et chaque évidement de connexion (60, 62) traverse complètement une paroi du support (30).

14. Procédé selon l'une des revendications 11 à 13, **caractérisé en ce qu'**à l'étape c), au moins chaque pièce de connexion (54, 56) comprenant une première section de pièce de connexion (58) et une deuxième section de pièce de connexion (64) est déformée élastiquement à partir d'une position initiale de montage, ou/et **en ce qu'**une étape d) est prévue pour relier l'insert de mélangeur (28) en substance au support (30) dans la zone de chaque pièce de connexion (52, 54, 56) positionnée de telle sorte qu'elle recouvre l'un des évidements de connexion (60, 62).
